# EUROPÄISCHE PATENTSCHRIFT

(11) **EP 2 024 522 B1**
(45) Veröffentlichungstag und Bekanntmachung des Hinweises auf die Patenterteilung: **29.11.2017**
(21) Anmeldenummer: 07703428.8
(22) Anmeldetag: 13.02.2007
(51) Int. Cl.: C21D 1/09, C21D 9/00, B23K 26/18, B23K 26/60

(54) **VERFAHREN ZUM HÄRTEN EINER RINGNUT EINES KOLBENBODENS MITTELS LASERSTRAHLEN**
PROCESS FOR HARDENING AN ANNULAR GROOVE OF A PISTON HEAD BY MEANS OF LASER BEAMS
PROCÉDÉ DE DURCISSEMENT D'UNE RAINURE ANNULAIRE DU FOND D'UN PISTON AU MOYEN DE FAISCEAUX LASER

(30) Priorität: 03.06.2006 DE 102006026109
(43) Veröffentlichungstag der Anmeldung: 18.02.2009
(73) Patentinhaber: KS Kolbenschmidt GmbH, 74172 Neckarsulm (DE)
(72) Erfinder: BÜRKLE, Gunter, 71726 Benningen (DE); SCHALLER, Christian, 74842 Billigheim (DE)
(74) Vertreter: Greif, Thomas
(86) Internationale Anmeldenummer: PCT/EP2007/001199
(87) Internationale Veröffentlichungsnummer: WO 2007/140826

(56) Entgegenhaltungen:
- EP-B1- 1 173 624
- DE-A1- 10 337 962
- DE-C1- 19 508 584
- JP-A- 57 171 617
- US-A- 5 515 770

## Beschreibung

Die Erfindung betrifft ein Verfahren zum Härten einer Ringnut eines Kolbenbodens eines Kolbens aus Stahl einer Brennkraftmaschine gemäß den Merkmalen des Oberbegriffs des unabhängigen Anspruchs 1.
Die US 5,515,770 A betrifft einen Kolben, der eine primäre Kompressionsringnut umfasst, deren untere und hintere Wandfläche durch Laserhärten gehärtet werden. Das offenbarte Verfahren umfasst die Schritte des Einsprühens der Ringnut mit einem Graphitspray und das Einwirken eines abgewinkelten, im Querschnitt elliptisch Laserstrahls an der unteren Fläche der Nut während der Rotation des Zylinderkopfes in vorbestimmten Parametern. Somit wird das Härten des Nutgrundes mit Hilfe von Laserstrahlen offenbart.
Ein Verfahren zum Härten einer Ringnut eines Kolbenbodens eines Kolbens aus Stahl einer Brennkraftmaschine mittels Laserstrahlen ist aus der EP 1 173 624 B1 bekannt. Bei diesem Verfahren wird zum Härten der Ringnuten ein Laserstrahl etwa in Umfangsrichtung an den Kolben herangeführt. Durch die etwa tangentiale Strahlführung wird eine Reflexion der Laserstrahlen in Richtung des Nutgrundes sowie bei entsprechend kleinem Auftreffwinkel auch eine Reflexion in Richtung der gegenüber liegenden Nutflanken vermieden. Es besteht allerdings der Nachteil, dass zum ausreichenden Härten der Laserstrahl eine hohe Energie aufweisen muss, was dazu führt, dass das Verfahren beim Härten nur sehr langsam durchgeführt werden kann. Dadurch verlängert sich bei der Herstellung solcher Kolben die Taktzeit bei der Serienherstellung in nachteiliger Weise. Außerdem ist es auf Grund der hohen Laserenergie von Nachteil, dass die Gefahr eines Verzuges des Kolbenbodenbereiches besteht. Aus JP 57171617 ist ein Verfahren zum Laserhärten einer Zahnstange bekannt, wobei die zu bestrahlende Oberfläche vor der Behandlung mit einer Graphit- oder Mangan-Phosphat-Beschichtung versehen wird, um die Absorption der Laserstrahlen zu erhöhen. Der Erfindung liegt daher die Aufgage zu Grunde, ein Verfahren bereitzustellen, bei dem zwar das an sich zufrieden stellend wirkende Härten mit Laserstrahlen beibehalten wird, gleichzeitig aber die eingangs geschilderten Nachteile vermieden werden.

Diese Aufgabe ist durch die Merkmale des unabhängigen Patentanspruchs 1 gelöst. Erfindungsgemäß ist bei dem Verfahren zum Härten der Ringnut mittels Laserstrahlen vorgesehen, dass zumindest die zu härtende Ringnut vor oder während des Härtens mit einer die Energie der Laserstrahlen absorbierenden Schicht versehen wird und anschließend die Beaufschlagung der Beschichtung mit den Laserstrahlen erfolgt. Bei der Schicht handelt es sich um eine Mangan-Phosphat-Beschichtung.
Nachdem zunächst der in einem beliebigen Verfahren (z.B. Schmieden oder Giessen) hergestellte Kolbenrohling fertig bearbeitet und auf Maß gebracht wurde, erfolgt das Aufbringen der Mangan-Phosphat-Beschichtung. Die Schicht absorbiert in vorteilhafter Weise die Energie der Laserstrahlen, so dass Reflexionen vermieden werden und eine unkontrollierte Aufhärtung des bestrahlten Bereiches, insbesondere des Nutgrundes, ausgeschlossen ist. Durch den erhöhten Absorptionsgrad ist eine geringere Energie der Laserstrahlen und gleichzeitig ein höherer Vorschub (insbesondere in Rotationsrichtung) möglich. Außerdem ist beim Härten mittels der Laserstrahlen die Erwärmung des gesamten Kolbens kleiner und somit ist die Gefahr von Verzügen, die zu Maßungenauigkeiten und damit zum Ausschuss führen würden, wesentlich reduziert.
Eine Mangan-Phosphat-Beschichtung ist daher von besonderem Vorteil, weil in der Regel die MnPh-Schicht sowieso auf den Kolben aufgebracht wird und deshalb kein zusätzlicher Prozess erforderlich ist.
Ein weiterer Vorteil der Erfindung ist darin zu sehen, dass eine Reinigung des Kolbens, insbesondere der Ringnut, vor der Laserbehandlung nicht erforderlich ist, da dies bereits vor dem Aufbringen oder nach dem Aufbringen der Beschichtung durchgeführt wird. Das Verfahren kann entweder mit feststehenden Kolben und rotierenden Laserstrahlen oder umgekehrt, mit feststehender Laserstrahlquelle und rotierendem Kolben, erfolgen.
In Weiterbildung der Erfindung werden die Laserstrahlen schräg zur Rotationsrichtung während der Bewegung des Kolbens beim Härten an diesen herangeführt. Da beim Laserhärten grundsätzlich ein Bereich im Umfang entsteht, der entweder eine Überlappung oder eine nicht gehärtete Zone umfasst ("Schlupf"), wird der Laserstrahl schräg zur Rotationsrichtung (= Vorschubrichtung) an den Kolben herangeführt.

Ein Ausführungsbeispiel der Erfindung, auf das diese jedoch nicht beschränkt ist, ist im Folgenden kurz beschrieben und anhand der Figuren erläutert.

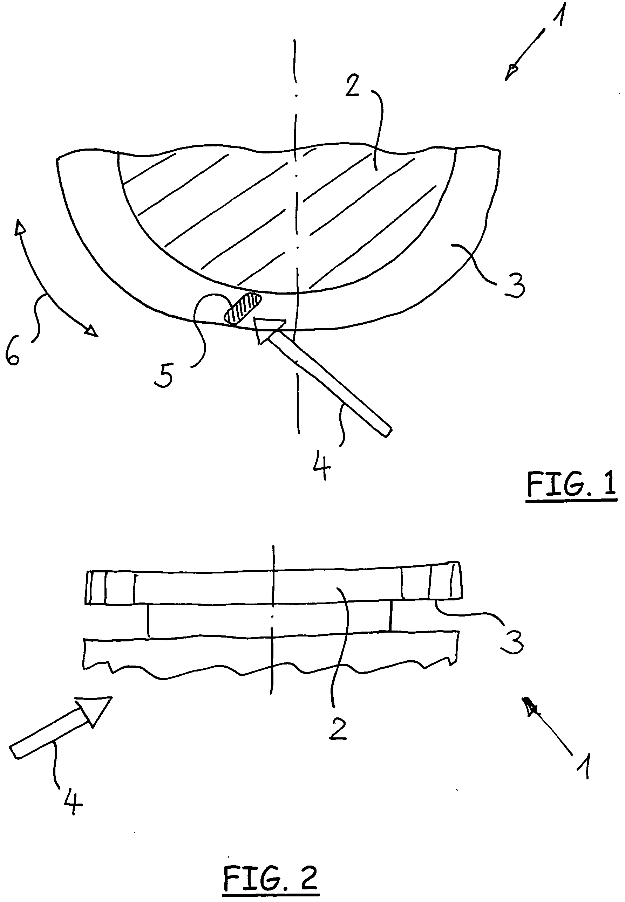

Die beiden Figuren 1 und 2 zeigen im Querschnitt sowie im Längsschnitt einen Kolbenboden 1 eines Kolbens einer Brennkraftmaschine, wobei der Kolben aus Stahl besteht, das sich in an sich bekannter Weise gut mittels Laserstrahlen härten lässt. Ein solcher Kolben weist die üblichen Elemente, wie z.B. Ringfeld, gegebenenfalls eine Brennraummulde, einen Kolbenschaft sowie Bolzenbohrungen auf, die zur Vereinfachung der Darstellung in den Figuren 1 und 2 jedoch nicht dargestellt sind.

In Figur 1 ist erkennbar, dass um den Innenbereich 2 des Kolbenbodens 1 herum eine Nutunterflanke 3 (bzw. Nutoberflanke, je nach Betrachtungsweise) einer Ringnut vorhanden ist, die mittels Laserstrahlen beaufschlagt wird. Die Beaufschlagung mittels Laserstrahlen 4 erfolgt erst, nachdem zumindest die zu härtende Ringnut vor dem Härten bzw. unmittelbar während des Härtens (Anlauffarben) mit einer die Energie der Laserstrahlen 4 absorbierenden Schicht auf der Unter- und/ oder Oberflanke und ggf. auch im Bereich des Nutgrundes sowie ggf. auch auf der Oberfläche des Kolbens im Bereich des Ringfeldes versehen worden ist. Werden die Laserstrahlen 4 auf die Nutunterflanke 3 gerichtet, entsteht ein Brennfleck 5 zum Aufhärten der Nutunterflanke 3. Während des Härtevorgangs bleibt die Quelle der Laserstrahlen 4 statisch, während der Kolbenboden 1 in Rotationsrichtung 6 rotiert. Umgekehrt ist es auch denkbar, dass der Kolben feststeht, während die Quelle der Laserstrahlen 4 um diesen herum rotiert.

In Figur 2 ist erkennbar, dass die Laserstrahlen 4 schräg zur Rotationsrichtung 6 während der Bewegung des Kolbens beim Härten an diesen herangeführt werden. Bei dem erfindungsgemäßen Verfahren können die Laserstrahlen 4 in Richtung der Kolbenmittenachse 7 gerichtet sein oder auch von dieser abweichen.

Insgesamt bietet das erfindungsgemäße Verfahren einen reduzierten Ringnutverschleiß durch gehärtetes Material, insbesondere der Nutunterflanke 3, eine erhöhte Prozessstabilität, geringere Herstellkosten (insbesondere durch Einsparung einer Reinigungsstation), eine geringere Taktzeit sowie die Reduzierung oder sogar Vermeidung von Verzügen der aufgehärteten und daneben liegenden Bereiche des Kolbens.

## Patentansprüche

1. Verfahren zum Härten einer Ringnut eines Kolbenbodens (1) eines Kolbens aus Stahl einer Brennkraftmaschine mittels Laserstrahlen (4), wobei zumindest die zu härtende Ringnut vor oder während des Härtens mit einer die Energie der Laserstrahlen (4) absorbierenden Schicht versehen wird und anschließend oder während des Prozesses die Beaufschlagung der Schicht mit den Laserstrahlen (4) erfolgt, **dadurch gekennzeichnet, dass** um einen Innenbereich (2) des Kolbenbodens (1) herum die Ringnut eine Nutunterflanke (3) bzw. Nutoberflanke aufweist, die mittels der Laserstrahlen (4) beaufschlagt wird,
wobei die zu härtende Ringnut vor dem Härten mit einer Mangan- Phosphat- Beschichtung versehen wird.

2. Verfahren nach Anspruch 1, **dadurch gekennzeichnet, dass** die Laserstrahlen (4) schräg zur Rotationsrichtung (6) während der Bewegung des Kolbens beim Härten an diesen herangeführt werden.

3. Verfahren nach einem der vorhergehenden Ansprüche, **dadurch gekennzeichnet, dass** die Laserstrahlen (4) auf eine Nutunterflanke (3) gerichtet werden, wobei ein Brennfleck (5) zum Aufhärten der Nutunterflanke (3) entsteht.

## Claims

1. Process for hardening an annular groove of a piston head (1) of a steel piston of an internal combustion engine by means of laser beams (4), wherein at least the annular groove that is to be hardened is provided, before or during hardening, with a layer that absorbs the energy of the laser beams (4) and then, or during the process, the layer is exposed to the laser beams (4), **characterized in that** around an inner region (2) of the piston head (1), the annular groove has a groove lower flank (3) or a groove upper flank that are exposed to the laser beams (4), wherein the annular groove that is to be hardened is provided, prior to hardening, with a manganese phosphate coating.

2. Method according to Claim 1, **characterized in that**, during hardening, the laser beams (4) are directed towards the piston at an angle to the direction of rotation (6) as the piston moves.

3. Method according to either of the preceding claims, **characterized in that** the laser beams (4) are directed at a groove lower flank (3), producing a burn patch (5) for hardening the groove lower flank (3) .

## Revendications

1. Procédé de durcissement d'une rainure annulaire du fond (1) d'un piston en acier pour moteur à combustion interne au moyen de faisceaux laser (4), au moins la rainure annulaire à durcir étant dotée d'une couche absorbant l'énergie des faisceaux laser (4) pendant le durcissement et l'application des faisceaux laser (4) sur la couche ayant lieu après ou pendant l'opération, **caractérisé en ce que**
la rainure annulaire présente autour d'une partie intérieure (2) du fond (1) du piston un flanc inférieur (3) de rainure ou un flanc supérieur de rainure sur lesquels sont appliqués les faisceaux laser (4),
la rainure annulaire à durcir étant dotée d'un revêtement de phosphate de manganèse avant le durcissement.

2. Procédé selon la revendication 1, **caractérisé en ce que** les faisceaux laser (4) sont amenés sur le piston obliquement par rapport au sens de rotation (6) du déplacement de ce dernier pendant le durcissement.

3. Procédé selon l'une des revendications précédentes, **caractérisé en ce que** les faisceaux laser (4) sont dirigés sur le flanc inférieur (3) de la rainure, ce qui fait apparaître un foyer (5) pour le durcissement du flanc inférieur (3) de la rainure.
